# EUROPEAN PATENT SPECIFICATION

(11) **EP 2 542 095 B1**
(45) Date of publication and mention of the grant of the patent: **07.11.2018**
(21) Application number: 11751513.0
(22) Date of filing: 07.03.2011
(51) Int. Cl.: A23G 1/32, A23G 1/56, A23L 2/66, A23L 33/105, A23C 9/15

(54) **ACIDIFIED PROTEINACEOUS BEVERAGES AND COMPOSITIONS**
GESÄUERTE PROTEINHALTIGE GETRÄNKE UND ZUSAMMENSETZUNGEN
BOISSONS ET COMPOSITIONS PROTÉIQUES ACIDIFIÉES

(30) Priority: 05.03.2010 US 311202 P
(43) Date of publication of application: 09.01.2013
(73) Proprietor: Mars, Incorporated, McLean, VA 22101-3383 (US)
(72) Inventor: VEGA, Cesar, Rockville, MD 20850 (US); LLOYD, Carol, Rockville, MD 20850 (US)
(74) Representative: J A Kemp
(86) International application number: PCT/US2011/027435
(87) International publication number: WO 2011/109826

(56) References cited:
- WO-A2-2010/097255
- US-A1- 2004 096 547
- US-A1- 2007 085 059
- US-A1- 2007 254 068
- US-A1- 2008 069 794
- US-A1- 2008 102 185
- US-A1- 2009 130 284
- US-A1- 2009 263 556
- US-B1- 6 905 715
- DATABASE BIOSIS [Online] BIOSCIENCES INFORMATION SERVICE, PHILADELPHIA, PA, US; 29 January 2003 (2003-01-29), ZHU QIN YAN ET AL: "Stabilizing effect of ascorbic acid on flavan-3-ols and dimeric procyanidins from cocoa.", XP002734911, Database accession no. PREV200300117524 & JOURNAL OF AGRICULTURAL AND FOOD CHEMISTRY, vol. 51, no. 3, 29 January 2003 (2003-01-29), pages 828-833, ISSN: 0021-8561

## Description

### FIELD OF THE INVENTION

The present subject matter relates to proteinaceous beverages and compositions comprising a cocoa extract which comprises cocoa polyphenols, an edible acid and a stabilizer, according to claims 1 to 5.

### BACKGROUND

Polyphenolic compounds are a broad class of bioactive substances derived from certain plant materials. Plant polyphenols have been associated with a variety of health benefits. Certain polyphenolic compounds including procyanidins occur naturally in cocoa. If processed properly, cocoa products including extracts, cocoa solids, and cocoa liquor can retain many of the original flavanols and procyanidins found in cocoa. When ingested, these cocoa polyphenols can provide significant health benefits to humans. For example, cocoa polyphenols have been shown to have beneficial effects on the flow mediated dilation of blood arteries and enhancing nitric oxide/nitric oxide synthase (NO/NOS) activity; such cardiovascular health effects are reported, for example, in WO 97/36497 published October 9, 1997. Thus, the ingestion of cocoa products having a high cocoa polyphenol content may provide significant health benefits. Therefore, there is a need in the art for compositions providing cocoa polyphenols.

### SUMMARY OF THE INVENTION

Surprisingly, it has been discovered that an edible acid under the conditions described herein, in the presence of a cocoa extract comprising cocoa polyphenols, has several advantages including: increasing the stability of the cocoa polyphenols contained in the cocoa extract, improving the palatability of compositions comprising cocoa extract, providing an appealing color to the compositions comprising cocoa extract, and in some embodiments providing non-chocolate flavored compositions with cocoa extract and health benefits of cocoa polyphenols.

In certain embodiments, the present subject matter is directed to an edible composition e.g. beverage such as a palatable composition (e.g. beverage) comprising a proteinaceous component such as a proteinaceous liquid, an edible acid, a cocoa extract comprising one or more cocoa polyphenols and a stabilizer (e.g. pectin). In some embodiments the edible composition may comprise a sweetener, e.g. sucrose or/or a non-nutritive sweetener, such as sucralose, acesulfame K (Ace K) or combinations thereof.

In other embodiments, the present subject matter is directed to a non-chocolate flavored composition comprising a proteinaceous component e.g. proteinaceous liquid, a stabilizer, a sweetener, e.g. sucrose, and/or a non-nutritive sweetener (such as sucralose, acesulfame K (Ace K) or combinations thereof), edible acid such as citric, tartaric and/or malic acid, a cocoa extract comprising one or more cocoa polyphenols and a stabilizer. The composition may further comprise a fruit flavor.

In further embodiments, the composition may be a ready-to-consume (e.g. ready-to-drink) composition comprising a proteinaceous component, e.g. liquid, an edible acid, a cocoa extract comprising one or more cocoa polyphenols and a stabilizer.

In yet further embodiments, the polyphenols in the compositions have an extended shelf life, e.g. the compositions retain over seventy five percent (75 %) of the total post-processing amount of polyphenols, and e.g. over ninety percent (90%) of the post-processing amount of (-)-epicatechin after nine (9) months storage at room temperature.

### BRIEF DESCRIPTION OF THE DRAWINGS

Figure 1A represents an HPLC profile of a dairy beverage prior to heat processing
Figure 1B represent an HPLC profile of the dairy beverage represented in Figure 1A after heat processing at 280°F for 6.5 seconds.
Figure 2 represent (-)-epicatechin [(-)-EC] and total flavanol/procyanidin (profile CF DP 1-10) levels as a function of storage time; the levels are expressed as a percentage of the original (post-processing; pre-storage) levels; samples stored at room temperature (23°C). Empty symbols represent (-)-EC; filled symbols represent total flavanols/procyanidins; diamonds represent 1.5 mg/g polyphenol drink without starch; triangles represent 1.5 mg/g polyphenol drink with starch; and circles represent 2.2 mg/g polyphenol drink without starch.
Figure 3 represents an HPLC profile of a shaken beverage sample of Example 3.
Figure 4 represents an HPLC profile of a supernatant of a beverage sample of Example 3 after four months of storage.
Figure 5 represents an HPLC profile of a sediment of a beverage sample of Example 3 after four months of storage.

### DETAILED DESCRIPTION OF THE INVENTION

Cocoa extracts comprising cocoa polyphenols are naturally bitter and astringent. Compositions containing a cocoa extract comprising cocoa polyphenols typically have been limited to chocolate-flavored compositions such as a cocoa beverage. Further, non-chocolate flavored compositions containing a cocoa extract comprising cocoa polyphenols have exhibited poor palatability due to the pronounced bitterness and astringency of the extract. Therefore, it would be advantageous to provide a non-chocolate flavored composition comprising a cocoa extract comprising cocoa polyphenols that is palatable. Additionally, it would be advantageous to provide compositions (having both chocolate/cocoa and non-chocolate/cocoa flavor) that are shelf stable (*i.e.,* do not require refrigeration) and wherein the polyphenols have an extended shelf life. This would expand the useful application of cocoa polyphenols.

Cocoa extracts comprising cocoa polyphenols typically impart a purple to brown color when added to an aqueous liquid. While the coloring is natural, it may not be appealing to those ingesting the composition containing the cocoa extract. Therefore, it would be advantageous to provide a composition comprising a cocoa extract comprising cocoa polyphenols that imparts an appealing color in aqueous liquids.

The term "cocoa extract" refers to the solvent-derived extracts containing cocoa polyphenols (catechin, epicatechin and/or procyanidins) that can be prepared by solvent extracting cocoa beans, cocoa nibs, or non-defatted, partially or fully defatted cocoa solids (e.g. cocoa cake and cocoa powder) prepared from cocoa beans or cocoa nibs. For example, *see* U.S. Pat. No. 5,554,645 to Romanczyk; U.S. Pat. No. 6,015,913 (Kealey et al.) issued Jan. 18, 2000; and U.S. Pat. No. 6,312,753 (Kealey et al.) issued Nov. 6, 200. US 2008/10285 A1 describes a method of making a cocoa-containing beverage product or ingredient by mixing a gel network into micro-particles to form a gel-in-water suspension. As a person of skill in the art can readily appreciate, the solvent used for extraction may vary (e.g. aqueous acetone). Further, as is known to persons of skill in the art, cocoa extract (which can be in powdered form) is a different material from cocoa powder prepared during traditional cocoa bean processing for cocoa beverage and chocolate manufacturing. For a description of traditional cocoa processing, see, for example, Industrial Chocolate Manufacture and Use, 3rd, ed,, Ed S.T. Beckett, Blackwell Publishing 1999. Additionally, in the case that an acid is used in the extraction process, it is intended that the resulting cocoa extract will be still combined with an edible acid as described herein, *i.e.,* any remaining acid in said cocoa extract would not be considered as part of the edible acid component of the composition of the present invention.

The term "cocoa flavanols" refers to the flavan-3-ol monomers catechin and epicatechin. The monomers include (+)-catechin and (-)-epicatechin and their respective epimers (e.g., (+)-epicatechin and (-)-catechin) and derivatives thereof including metabolites thereof (e.g. see Example 2 for description of metabolites). As a person of skill in the art can appreciate, unlike tea, cocoa does not contain gallated and/or galloylated flavanols, thus the term "cocoa flavanols" does not include catechin gallate, epicatechin gallate, epigallocatechin, epigallocatechin gallate or the like.

The term "cocoa procyanidin" refers to, naturally occurring or synthetically derived oligomers of catechin and/or epicatechin.

Any reference to "cocoa polyphenols" should be understood to comprise cocoa flavanols and/or cocoa procyanidins.

The present compositions typically do not contain tea, wine, grape seed or pine bark-derived polyphenol compounds and/or extracts. However, these compounds may be suitable for use in the present invention.

Also within the scope of the invention are the compositions comprising at least one of the flavanols having the formula "A" and the procyanidins having the formula "Aₙ" where n is an integer from 2 to 18 and higher. "A" has the formula: 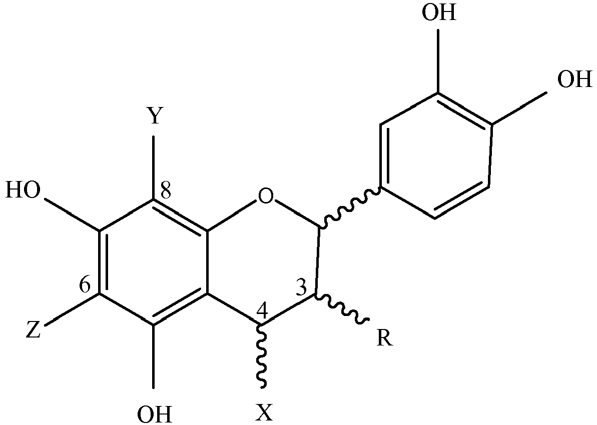
where R is 3-(α)-OH, 3-(β)-OH, 3-(α)-O-saccharide, 3-(β)-O-saccharide, 3-(α)-O-C(O)-R¹, or 3-(β)-O-C(O)-R¹;
where bonding between adjacent monomers takes place at positions 4 and 6 or 4 and 8;
where a bond to a monomer in position 4 has alpha or beta stereochemistry;
where X, Y, and Z are selected from the group consisting of A, hydrogen, and a saccharide moiety, with the proviso that as to at least one terminal monomer, bonding of the adjacent monomer thereto is at position 4 and optionally Y = Z = hydrogen; and
where the saccharide moiety is a mono- or di-saccharide moiety which may be optionally substituted with a phenolic moiety;
where R¹ may be an aryl or heteroaryl moiety optionally substituted with at least one hydroxy group; and
salts, derivatives, and oxidation products thereof. Advantageously, the saccharide moiety is derived from the group consisting of glucose, xylose, rhamnose, and arabinose. The saccharide moiety and any or all of R, X, Y, and Z may optionally be substituted at any position with a phenolic moiety via an ester bond. The phenolic moiety is selected from the group consisting of caffeic, cinnamic, coumaric, ferulic, gallic, hydroxybenzoic, and sinapic acids.

In certain embodiments, the composition comprises at least one of the above compounds wherein R is 3-(α)-OH and/or 3-(β)-OH.

The term "composition" includes, but is not limited to, dietary supplements, beverages and gels (e.g. acidified dairy gels). Examples of gels are puddings and custards.

The term "astringent" refers to a tactile sensation perceived as dryness, puckering and/or roughness in the oral cavity. Perception of astringency has a slow onset and is characterized by a long persistence; it may not be instantaneous but may require time for development. Although many compounds elicit an astringent sensation, astringency is chemically defined as the ability to precipitate proteins. A person of skill in the art will know how to assess and/or measure the astringency. For example, methods of sensory evaluation for assessment of characteristics such as bitterness, astringency, etc. are known in the field and practiced for example, as per recommendations and guidelines of the International Standard (ISO), and recognized bodies such as The American Society for Testing and Materials (ASTM) . *See also:* Hanna Peleg et al., Bitterness and astringency of flavan-3-ol monomers, dimers and trimers, Journal of the Science of Food and Agriculture 79:1123-1128 (1999).

As used herein, the term "palatable" means that the composition such as a beverage has an agreeable or pleasant taste upon consumption both vis-à-vis the sense of taste and tactile sensation, for example, "palatable" means that elements of bitterness and astringency are in balance with the rest of the composition (i*.e.,* in balance with sweetness and sourness) (bitterness, astringency and aftertaste are properties, as a person of skill in the art can appreciate, associated with cocoa extract); "palatable composition" also means that the presence of cocoa extract, or cocoa flavors, cannot be readily perceived therein. A hedonic scale is routinely used in the food science art to assess the palatability of food compositions. The hedonic scale that has been most widely used, for example, is a 9-point scale in which a person rates their preference for food, ranging from "extremely dislike" to "extremely like" with the midpoint of 5 being neither like nor dislike. Thus, a composition of the invention is "palatable" if a person rates a composition as at least 5 and above, e.g. 6 and above.

The term "shelf-stable" refers to a product stored under ambient temperature and humidity conditions and, if the package integrity is maintained during storage, shipping, display at retail, and in the home, will not spoil or become unsafe from the microbial point of view throughout the manufacturer's specified shelf-life.

The phrase "having an extended shelf life" when used in connection with flavanols and/or procyanidins and/or polyphenols refers to stability of these compounds after storage of the composition at room temperature (about 23 °C) for a prolonged period of time when the amount of polyphenolic compounds in the composition after storage is compared with the amount present after the completion of manufacturing the composition, *i.e.,* at the beginning of transport and storage. This property of certain compositions described herein can be expressed vis-à-vis any polyphenolic compound in the composition, for example, (-)-epicatechin and/or procyanidin, and the duration of storage time. The stability may be expressed as a percentage of retained (or lost) polyphenolic compound(s) after the shelf storage in reference to the amount of the polyphenolic compound(s) after the production of the composition and/or at the beginning of transport and storage.

Thus, the present invention is directed to edible compositions such as beverages (e.g. palatable beverages) or gels comprising a proteinaceous component e.g. liquid, an edible acid, a stabilizer and a cocoa extract comprising one or more cocoa polyphenols. In some embodiments, the composition e.g. beverage or gel may comprise a sweetener such as sucrose The composition may be a dairy composition (e.g. milk-based beverage or gel) or a non-dairy composition (e.g. soy milk or almond-milk based beverage or gel). The composition may further comprise a fruit flavor.

The term "proteinaceous component" is intended to refer to any protein and/or protein hydrolysate. The term "proteinaceous liquid" is intended to mean any liquid containing protein or reconstituted dry protein. Such proteinaceous liquids include animal milk, soy milk, almond milk, oat milk, rice milk, whey, yogurt, casein, reconstituted dry versions thereof and mixtures thereof. As used herein, "yogurt" is a product obtained by microbial fermentation. In certain embodiments of the invention, the proteinaceous composition is prepared without fermentation. The protein level in the composition may vary, for example, from at least 0.5% and as high as for example 5.5% depending on protein type, (e.g. fractionation of protein or amino acid/isolates), and the formula (e.g. specifically level of calcium). For a product that is not drinkable, e.g. more of a firmer gel or yogurt like consistency, the protein content may be as high as 8% depending on protein type, level of calcium, thickener and stabilizers. A person of skill in the art can optimize these conditions using guidance in the specification vis-à-vis the desired formulation and general knowledge in the art.

The compositions of the invention may be non-chocolate flavored. As used herein, the term "non-chocolate flavored composition" means that the composition has no readily perceivable chocolate or cocoa flavor even though the extracts and compounds used in the composition are derived from cocoa, *i.e.,* the term "non-chocolate flavored" is intended to mean the same as "non-cocoa flavored"-the "non-chocolate flavored compositions" are thus unlike the compositions containing cocoa powder which compositions have cocoa/chocolate flavor.

The composition of the present subject matter contains an edible acid. Acceptable edible acids include, but are not limited to, citric acid, tartaric acid, lactic acid, ascorbic acid, fumaric acid, phosphoric acid, malic acid and combinations thereof. In certain embodiments, the compositions contain citric, tartaric or malic acid powders or any combination thereof, for example a combination of citric and malic acid. As a person of skill in the art can appreciate, ascorbic acid (Vit C) may be added in accordance with the U.S. Recommended Daily Intakes (RDI) requirements, e.g. to provide up to 100% of the RDI to provide for fortification of the present beverage with Vit C; however, for the purposes of the present invention, Vit C should not be classified as an acidifier.

In some embodiments, the amount of the acid (e.g. citric acid) in the proteinaceous beverage or other composition is such as to achieve a pH of less than the isoelectric point of the proteins present in the beverage, typically a pH of 0.2 to 0.4 lower than the isoelectric point. As a person of skill in the art can appreciate, various proteins have different isoelectric points. For example, isoelectric point of casein is at pH 4.6; whey at pH 5.2; and soy milk at pH 4.5, Thus, the composition may have the pH below 4.6, e.g. below 4.4, or below 4.2, e.g. or below 4.0. In view of the guidance herein, a person of skill in the art can optimize the acid amount and particularly the upper acid amount depending on the resulting beverage flavor, for example, too high of an acid content may result in a beverage too sour for consumption. In certain embodiments, the pH of the composition is no less than 3.5, in other embodiments, the pH is no less than 3.6. Examples of compositions include those having a pH between 3.5 and 4.2 or a pH between 3.6 and 4.0 or a pH between 3.8 and 4.0.

Advantages of decreasing the pH include reduction in or balance of the bitterness and astringency of the cocoa extract, providing a natural red color to the composition, and providing stability for the cocoa polyphenols in the composition. For purposes of this disclosure, "natural color" is as defined below.

The presence of an edible acid also provides for a reduction in the bitterness and astringency of the composition so as to make the composition palatable. The dryness, puckering and roughness throughout the oral cavity associated with the bitterness and astringency of the cocoa extract comprising cocoa polyphenol is greatly reduced by the presence of the edible acid.

The cocoa extract comprising cocoa polyphenols in the presence of an edible acid provides a more appealing natural red to maroon color for the composition (maroon color being more apparent than red color with the increasing amounts of cocoa extract). As used herein, "natural color" means that the color is intrinsic to (derived from) the cocoa extract under the acidic pH, *i.e.,* due to the presence of the acid component of the drink and not achieved by purposefully changing the color by adding coloring agents. While coloring agents may be added to the compositions described herein, such coloring agents (e.g. Red 40, carmine) are not necessary and are preferably excluded from the compositions described herein. This is advantageous since certain food colorings may cause adverse reactions or are for other reasons not appealing to consumers. Thus, compositions without food coloring agents are within the scope of the invention. As used herein, the term "food coloring agent" is as defined by the US Food and Drug Administration but expressly excludes fruit flavors. The compositions of the invention may thus contain fruit flavors.

One of the advantages of the compositions of the present invention is the increased stability of polyphenols. In this respect, the low pH increases retention of polyphenols over the shelf life of the composition. Thus, in certain embodiments, compositions retain over seventy five percent (75 %), e.g. over eighty percent (80 %), e.g. over ninety percent (90%), e.g. over ninety five percent (95%) of the post-processing amount of (-)-epicatechin after at least six (6) month, and typically after nine (9) months, of storage at room temperature. Vis-à-vis the total content of a polyphenol in the composition, for example a total content of flavanols and procyanidins (profile 1-10), compositions retain in certain embodiments over seventy five (75%), e.g. over eighty percent (80 %), of the post-processing amount after at least six (6) month, and typically after nine (9) months of storage at room temperature. As used herein, the term "post-processing amount" refers to the amount of polyphenolic compound(s) after the completion of manufacturing of the composition, *i.e.,* at the beginning of the period of transfer and storage. Achieving retention of polyphenolic compounds after storage is challenging, and for compositions containing cocoa extract this is illustrated in Example 1.

The compositions described herein contain at least one stabilizer. A "stabilizer" is an agent which coats, covers or surrounds a protein in such a way that it prevents the curdling of the protein by an acid. Useful stabilizers include hydrocolloids. Examples of stabilizers according to the present invention include pectin e.g. high methoxyl pectin and carboxymethylcellulose and mixtures thereof. As used herein, the term "pectin" includes all suitable pectins. Based on the guidance herein and general knowledge in the art, a person of skill in the art would appreciate the types and amounts of stabilizers to be used in the present invention. For example, pectin is added to the composition at no less than 0.35 %; the ratio of the protein (casein) and pectin is typically not higher than six.

The composition of the invention may comprise cocoa extract comprising epicatechin (e.g. (-)-epicatechin), catechin and procyanidin oligomers 2-10 (*i.e.,* profile 1-10). In certain embodiments, the cocoa extract comprises epicatechin and/or any one of the oligomers 2-10 and/or combinations thereof. The compositions may optionally contain cocoa powder, for example cocoa powder processed to retain flavanols and procyanidins as described, for example, in U.S. Pat. No. 6,015,913 (Kealey et al.) issued Jan. 18, 2000; and U.S. Pat. No. 6,312,753 (Kealey et al.) issued Nov. 6, 2001.

The composition of the present subject matter has a total flavanol content (including monomers and oligomers) of at least about 100 milligrams or at least about 200 mg per serving (*i.e.,* per unit of the product) to provide the health benefits associated with polyphenolic compounds, e.g cocoa polyphenols, and typically no more than about 1000 mg per serving for the composition to remain palatable. The total flavanol content may be, for example, from at least about 200 to about 1000 milligrams per serving, or from at least about 300 to about 750 milligrams per serving, or from at least about 300 to about 600 milligrams per serving, or at least about 270 mg or at least about 350 milligrams per serving of the composition. As shown in the examples, the serving size of the beverage or other composition may be between 50 to 250 ml (e.g. 150 ml, 100 ml, 50 ml) or between 4 to 12 oz (e.g. 4 oz, 8 oz, 12 oz). Typically, the composition may contain an amount of at least one polyphenolic compound sufficient to confer a health benefit to a subject e.g. a human consuming the composition. In certain embodiments, the composition may contain at least 0.05 to 0.45 mg/g (-)-epicatechin and/or at least 1.5 mg/g total epicatechin, catechin and procyanidin oligomers 2 to 10, however, higher amounts are also contemplated. If a cocoa extract having a flavanol/procyanidin oligomer profile 1-10 is used, and a certain amount of (-)-epicatechin is desired, a person of skill in the art can determine that amount based on the content of (-)-epicatechin in the extract, for example, depending on extraction methods, an extract may contain 25-30 % or about 40% (-)-epicatechin. In certain embodiments, in order to preserve palatability of the composition, the composition may contain up to and including 2.2. mg/g, or up to and including 2.5 mg/g, or up to and including 3 mg/g of epicatechin and/or any procyanidin oligomer or a total epicatechin, catechin and procyanidin oligomers 2 to 10. The cocoa polyphenol content of the composition is measured by the method described in "Method performance and multi-laboratory assessment of a normal phase high pressure liquid chromatography-fluorescence detection method for the quantitation of flavanols and procyanidins in cocoa and chocolate containing samples," Rebecca J. Robbins, Jadwiga Leonczak, J. Christopher Johnson, Julia Li, Catherine Kwik-Uribe, Ronald L. Prior, and Liwei Gu, Journal of Chromatography A, 1216 (2009) 4831-4840.

The cocoa extract used in the compositions of the present subject matter can be milled to reduce the particle size of the extract. The milled cocoa extract typically contains at least about 300 milligrams of cocoa polyphenols (profile 1-10, flavanols and procyanidin oligomers), for example, about 300 to about 700 milligrams, or at least about 400 milligrams, or about 400 to about 600 milligrams, or about 400 to about 500 milligrams, per gram of the milled cocoa extract. The cocoa extract which is present in compositions of the present subject matter may have a reduced particle size of about 75 microns or less, preferably about 30 microns or less, more preferably about 20 microns or less, and most preferably about 10 microns or less. This reduced particle size provides for a further reduction in the astringency, which in turn provides for a more palatable composition.

The composition may have additional elements such as sweeteners, thickening agents, fruit concentrates, natural flavors, vitamins, minerals, buffering agents and other materials.

Suitable sweeteners (nutritive and non-nutritive) may include those typically used in foods and include, but are not limited to, sucrose (*e.g.,* from cane or beet), dextrose, fructose, lactose, maltose, glucose syrup or the solids thereof, corn syrup or the solids thereof, invert sugar, hydrolyzed lactose, honey, maple sugar, brown sugar, molasses, high potency sweeteners, sugar alcohols (polyols), or combinations thereof. In the art, the following are recognized as high potency sweeteners--aspartame, cyclamates, saccharin, acesulfame, neo-hesperidin dihydrochalcone, sucralose, alitame, stevia sweeteners, glycyrrhizin, thaumatin, acesulfame-K, and mixtures thereof. Examples of sugar alcohols include those typically used in the art and include, but are not limited to, sorbitol, mannitol, xylitol, maltitol, isomalt, and lactitol, and the like. Particularly preferred sweeteners include sucrose and sucralose and combinations of sucralose and ace K. For the purposes of the present invention, an advantageous sweetener both provides sweetness and masks bitterness and astringency (*i.e.,* it acts as a bitterness/astringency blocker) as is the case with sucralose.

The composition may also contain a thickening agent, such as starch, native or modified, or mixtures thereof. Certain stabilizer such as pectin and carboxymethyl cellulose may also be used to provide thickening. Starch can be modified corn starch, tapioca or rice starch and can optionally be added, for example, at about one percent (1%) depending on the desired properties of the resulting composition. In certain embodiments, the thickening agent is neutral vis-à-vis the taste and astringency of the composition, *i.e.,* it does not affect these properties.

The composition or beverage may also contain flavors including but not limited to natural or artificial fruit flavors, vanillin, spices, and naturally expressed citrus or spice oils, and combinations thereof. Examples of fruit flavors are berry (raspberry, strawberry), apple, pineapple or banana. Fruit flavors may be provided as a fruit juice or puree. Compositions may also be cocoa/chocolate flavored by using cocoa powder, chocolate liquor and/or chocolate pieces or crumbs and may contain combinations of cocoa/chocolate and fruit flavors.

Administration of the composition comprising the cocoa extract comprising cocoa polyphenols is preferably by oral administration.

The compositions of the invention may be prepared using standards methods in food art using the components described herein and keeping in mind government regulations. However, use of pH of 4.6 or less in the composition and selection of appropriate processing steps is advantageous for achieving retention of polyphenolic compounds during processing and storage. The compositions may be prepared using an aseptic process or alternatively a "hot fill and hold" process depending on availability, type of packaging, cost and batch size.

Aseptic process is exemplified in Example 2. The ingredients are mixed preferably by adding a stabilizer (e.g. pectin) into the protein component before adding the acid and the composition is subjected to a temperature treatment. Importantly, in the absence of acid and/or if the pH of the composition is above 4.6, aseptic thermal processing at temperatures of 285F or higher are required (typically above 276F). However, given the acid concentration and pH of the compositions described herein, lower temperatures (e.g. below 285F or preferably below 276F) may be used for processing, for example temperatures less than 225F, e.g. 195F to 225F for about three to ten seconds (the suitability of such temperatures to achieve an aseptic product is described in Example 2 where no adverse microbial activity was detected). These temperatures minimize the loss of polyphenolic compounds in the composition. In certain embodiments, the compositions after processing retains at least eighty percent (80%), e.g, at least ninety percent (90%), e.g. at least ninety five percent (95%), e.g. at least ninety seven (97%) of the polyphenolic compounds added to the composition prior to processing are retained. In contrast, temperature of 285F and higher results in 30-50% losses as shown in, and under the conditions described in. US Pat. Publ. 2010/0055248 (*see* Table 3).

In other embodiments, when "hot fill and hold" process is used, the composition may be treated to a temperature of for example at least 195F, e.g. at least 200F, placed hot into containers and sealed hot, held for 10-30 seconds and then cooled. In certain embodiments, the compositions after processing retains at least eighty percent (80%), e.g, at least ninety percent (90%), e.g. at least ninety five percent (95%), e.g. at least ninety seven (97%) of the polyphenolic compounds added to the composition prior to processing are retained.

Optionally, when performing the above processes, the production lines may be flushed with nitrogen or vacuum may be used in order to remove oxygen.

Due to processing at lower temperatures and lower pH as described herein, in certain embodiments, the post-processing compositions retain the original (*i.e.,* preprocessing) HPLC profile of flavanols and/or procyanidins 2-10. In other words, such compositions have no more than minimal changes in the (-)-epicatechin enatiomer content *(i.e.,* there is negligible transformation into (-)-catechin). Typically, the compositions described herein contain certain amount of (-)-catechin prior to heat processing (e.g. the ratio of (-)-epicatechin to (-)-catechin may generally be in the ratio between 8:1 to 11:1). Subsequent to heat treatment, in certain embodiments, the compositions have less than one percent (1%) or less than five percent (5%) or less than ten percent (10%) or less than fifeteen percent (15%) of (-)-catechin increase in reference to the total amount of (-)-epicatechin and (-)-catechin in the sample.. Temperature units equivalent:
285F = 140.56°C; 283F = 139.44°C; 276F = 135.56°C; 225F = 107.22°C; 222F=105.56°C; 200F = 93.33°C; 197F=91.67°C; 195F =90.56°C; 155F= 68.83°C; 135F=57.22°C; 65F=18.33°C.
Pressure units equivalent:
1000 psi = 6894.76 kPa; 200 psi=1378.95 KPa.

The invention is further described in the following examples.

### EXAMPLES

### EXAMPLE 1

### Ready to drink (RTD) beverage: Process and ingredient effects on cocoa polyphenol (CP) retention and rearrangement

In order to produce a shelf stable RTD dairy-based beverage containing cocoa polyphenols (flavanols/procyanidins), an ultra high temperature (UHT) sterilization step (*e.g.,* 283°F for 3 seconds) is required. This thermal process not only reduces the level of flavanols and procyanidins, but also initiates a chemical reaction that alters the polyphenolic compounds in the beverage, *i.e.,* it causes an epimerization reaction. The detrimental effects of such processing are exemplified in the present example and in the US Pat Publ. 2010/0055248 to Woelfel and Robbins entitled "Products containing polyphenols" [the '248 Publication] .

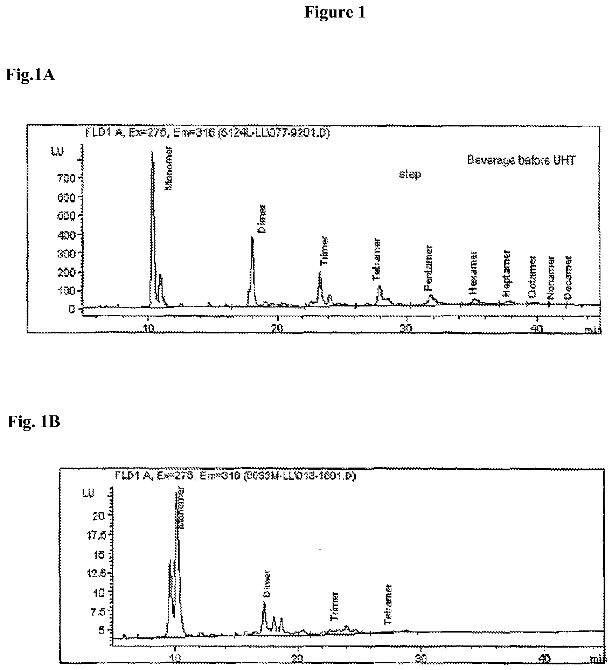

Test beverages were prepared by combining the ingredient as described in Table 1 of the '248 Publication and processed at 280 F for 6.5 seconds using a continuous flow process as described in the '248 Publication (*see* Figure 1 of the '248 Publication for the schematic representation of the process). Fourteen different runs were performed. Samples for analyses of CP loss/retention and HPLC profile were collected at the initial mixing of ingredients stage and then at the package filling stage (*i.e.,* final step). Sampling points for analysis were limited due to the nature of the process (continuous flow).

Beverage samples were prepared for analysis as described in the '248 Publication, pars. 56-65 and analyzed using High Performance Liquid Chromatograph (HPLC) (*see also* Adamson et al., HPLC Method for the Quantification of Procyanidins in Cocoa and Chocolate Samples and Correlation to Total Antioxidant Capacity, J. Agric. Food Chem., (1999) 47:4184-4188). Representative HPLC traces of a beverage before and after thermal processing are shown in Figures 1A and B (*see* also Figure 6 of the '248 Publication). Comparing profiles in Figures 1A and 1B, differences were observed (compare monomer peaks before and after heat processing and dimer peaks before and after heat processing). The HPLC profile shown in Figure 1B is referred to as 'alternate profile" and could be a result of epimerization reaction. Additionally, when the higher procyanidin oligomers are compared, the heat treated beverage contains a dramatically reduced amount of higher oligomers.

The percentage loss of total CP was calculates as follows: % loss=(amount before heat treatment (minus) amount after heat treatment)/amount before heat treatment x 100. On average, based on 14 different runs (w/similar beverage recipes) total CP loss was about 35% (about 65% retention). Higher losses (up to 50 %) were also observed (*see* the '248 Publication, Table 3). Additional CF losses were observed after first several months of storage (up to additional 35% after four months of storage).

The high temperature step appears to have the main and strongest impact on CP content and profile. Other ingredients (e.g. stabilizers, flavors, CP source, citrates, phosphates or fat content) did not appear to have an effect on the CP retention.

### EXAMPLE 2

### Ready-to-drink beverage

In order to overcome the disadvantages of CP loss described in Example 1, experiments were conducted with a number of ready-to-drink beverages and it was determined that adding an edible acid to the beverage and achieving a pH of less than 4.6 was advantageous in that respect.

To prepare a RTD beverage, the ingredients listed in Table 1 were combined following the procedure below. Prototypes were made to deliver up to 500 mg cocoa polyphenols (profile 1-10) per cup (240 mL). The calories per serving (1 cup) were in the range of 180-200 and were mainly from carbohydrate sources as the formula was practically devoid of fat.

**TABLE 1**

| **Ingredient** | **% (w/w)** |
|---|---|
| | |
| Low heat skim milk powder (reconstituted at 11% w/w) | 67.9 |
| Raspberry concentrate (65 Bx) | 3.3 |
| 2% high-methoxyl Pectin | 18.7 |
| Sucrose | 8.3 |
| 50% citric acid | 1.4 |
| Cocoa extract containing cocoa polyphenols | 0.3 |
| TOTAL | 100.00 |

Pectin, a stabilizer, was hydrated (2% w/w suspension) by dispersing in water (¼ of total sugar was added) at room temperature. Milk was reconstituted in water (½ of the total sugar was added) and mixed thoroughly. A citric acid solution was then prepared (50% w/w in water). The cocoa extract containing cocoa polyphenols was blended with the remaining ¼ of sugar. Then, the pectin suspension was added to milk and mixed thoroughly. A raspberry concentrate was added slowly and mixed thoroughly. Subsequently, the acid solution was added and mixed vigorously using a high speed Silverson® mixer. The sugar and cocoa extract blend was then added and mixed vigorously. The pH was adjusted about 4.0 and the beverage was then preheated in a tubular heat exchanger to about 155°F. The product was homogenized at 1000psi, 200psi second stage.

The RTD beverage was heat treated in compliance with regulations provided in the US Code of Federal Regulations, Title 21 (*e.g.,* 21 CFR 108, 110, 113, 114) for processing shelf stable acidified foods in sealed containers. Three batches of the product were prepared, two batches were brought up to the sterilization temperature of 222°F and held at that temperature for 10 seconds with a laminar correction factor of 0.5, and one batch was treated using 197 °F for 10 seconds. The products were then immediately cooled to a temperature of 135°F; then cooled further to a temperature of 65°F and finally sent to an aseptic tank to be held before packaging. The product was aseptically packaged using the Tetra Prisma Aseptic Model 19 010v filling machine in 330ml packs using tba/jl-h type packaging material.

In order to assess the processing losses of flavanols/procyanidins (1-10 profile), the amount of the compounds after processing was determined using the approach described in Robbins et al., Method performance and multi-laboratory assessment of a normal phase high pressure liquid chromatography-fluorescence detection method for the quantitation of flavanols and procyanidins in cocoa and chocolate containing samples, J of Chromatography (2009) 4831-40. The losses during processing were close to negligible (about 2%) which was attributed to the acidic nature of the product.

A version of the beverage was also prepared with added modified starch (about 2.0% w/w). The starch was added in order to improve mouth feel and was added to reconstituted milk together with ½ of the total sugar and mixed thoroughly.

### Quality Control:

According to 21 CFR 114.80(a)(1) all acidified foods "... shall be thermally processed to an extent that is sufficient to destroy the vegetative cells of microorganisms of public health significance and those of non-health significance capable of reproducing in the food under the conditions in which food is stored, distributed, retailed, and held by the user." To ensure compliance with the regulation, the aseptically packaged products from three batches described above were plated on Orange Serum agar (available from BD, USA) and incubated for 7 days. Based on the data shown in the table below, the products were determined commercially sterile.

**TABLE 2**

| Batch | Samples Plated | Plating Results | Initial pH | Final pH | Solids % |
|---|---|---|---|---|---|
| 1 | 12 | 0 | 3.88 | 3.83 | 18.41 |
| 2 | 12 | 0 | 3.94 | 3.87 | 20.68 |
| 3 | 12 | 0 | 3.79 | 3.72 | 20.13 |

### Shelf life of CPs

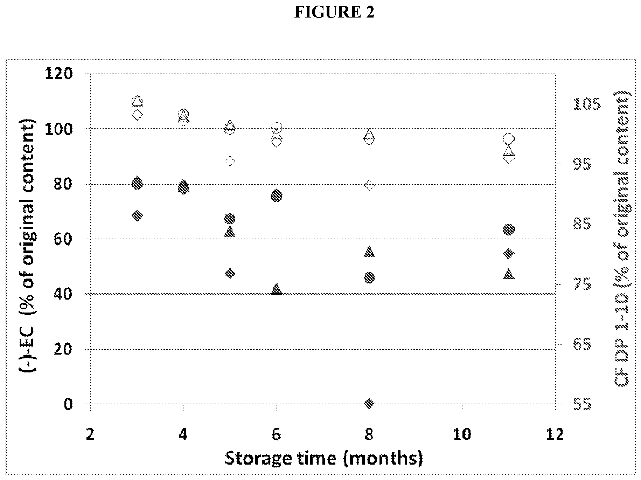

Test samples were subjected to storage to determine the stability of cocoa polyphenols. The amount of (-)-epicatechin and the total CP content (profile 1-10) were measured at 3, 4, 5, 6, 8 and 11 months of storage using the above mentioned method of Robbins. After 11 months of storage at room temperature, the loss of (-)-epicatechin was in the order of <10%. As for the total CP content (profile 1-10), losses in the order of <20% were found. Figure 2 illustrates these results over the period of storage.

### EXAMPLE 3

### Analysis of RTD dairy beverage after storage

Samples of beverages prepared in Example 2 were stored for four (4) months at room temperature in order to test for the presence of sediment.

Sediment was detected. To understand the nature of the sediment and the supernatant liquid phase, two cartons were submitted for analysis without agitation and one carton was shaken thoroughly and then submitted for analysis. Shaking eliminated the sediment.

In the samples that were not shaken, the separation of the two phases was done by filtering through a weighed piece of cheesecloth and then squeezing the cheesecloth to ensure all the supernatant was removed. The weights of both fractions of the drink were recorded before and after drying. The samples were analyzed for percent (%) protein, theobromine, caffeine, (-)-epicatechin, total cocoa polyphenols (profile 1-10) and enantiomers (to assess if epimerization occurred). The % protein values were corrected for nitrogen contributed by theobromine and caffeine. The samples were subjected to HPLC analysis such that chromatograms from the entire shaken sample were compared with the supernatant and sediment samples to better understand the distribution of flavanol and procyanidin species between the phases. The above referenced method of Robbins was used.

Regarding the samples that were separated into sediment and supernatant, the sediment represented about 4 % of the total beverage weight, and the supernatant constituted about 96 % of the total weight. The analyses showed that the sediment was mainly comprised of protein. Summary of the results is represented in Table 3 (Sample 1 represent the shaken sample where all the beverage constituents were dispersed, Samples 2 and 3 represent samples that were separated into supernatant and sediment, each of which was separately analyzed).

**TABLE 3**

| | Total Weight (g) | Total CP 1-10 (mg) | **% total CP in sediment** | Total (-)-EC (mg) | **% total (-)-EC in sediment** | Total Protein (g) | **% total protein in sediment** |
|---|---|---|---|---|---|---|---|
| Sample 1 | 358 | 417.428 | - | 57.62 | - | 8.53 | - |
| Sample 2 | 359.64 | 432.161 | **30.19** | 61.77 | **15.87** | 9.84 | **36.38** |
| Sample 3 | 357.73 | 430.158 | **31.19** | 60.85 | **15.75** | 9.82 | **36.44** |

Referring to Table 3, the sediment contained an average 36.4% of total protein, 30.6% of CP profile 1-10, and 15.8% of total (-)-EC.

Even though about 31% of total cocoa polyphenol (profile 1-10) was present in the sediment, it consisted mainly of high molecular weight oligomers (tetramers and above).

Distribution of flavanol and procyanidin species in a tested sample, supernatant and sediment (expressed as mg/g and as % of total CP 1-10) is represented in Table 4.

**TABLE 4**

| | **Samples Analyzed from** | | | | | |
|---|---|---|---|---|---|---|
| | **Supernatant** | | | **Sediment** | | |
| **Flavanol Species** | **mg/g- as is** | % | **Total mg in 346g of sample** | **mg/g-as-is** | % | **Total mg in 13.66g of sample** |
| monomer | 0.154 | 17.70 | **53.27** | 0.71 | 7.42 | **9.68** |
| dimer | 0.161 | 18.51 | **55.69** | 1.36 | 14.29 | **18.64** |
| trimer | 0.123 | 14.14 | **42.55** | 1.60 | 16.80 | **21.91** |
| tetramer | 0.107 | 12.30 | **37.01** | 1.52 | 15.89 | **20.73** |
| pentamer | 0.096 | 11.03 | **33.21** | 1.32 | 13.84 | **18.05** |
| hexamer | 0.082 | 9.43 | **28.36** | 1.21 | 12.67 | **16.54** |
| heptamer | 0.049 | 5.63 | **16.95** | 0.67 | 6.97 | **9.09** |
| octamer | 0.056 | 6.44 | **19.37** | 0.54 | 5.64 | **7.36** |
| nonamer | 0.024 | 2.76 | **8.30** | 0.38 | 3.94 | **5.14** |
| decamer | 0.019 | 2.18 | **6.57** | 0.24 | 2.55 | **3.33** |
| **TOTAL** | **0.87** | 100 | **300.93** | **9.55** | 100 | **130.47** |

Referring to the above Table, the supernatant was rich in monomers , it contained total 53.27 mg of monomers while the sediment contained total 9.68 mg of monomers.

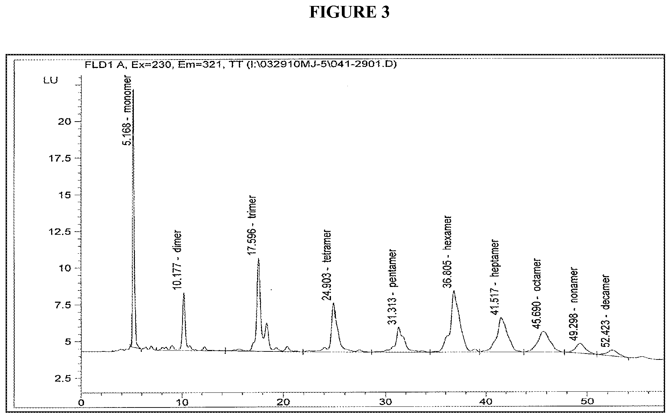

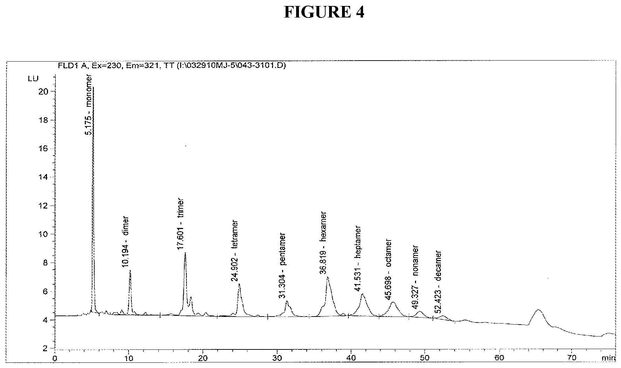

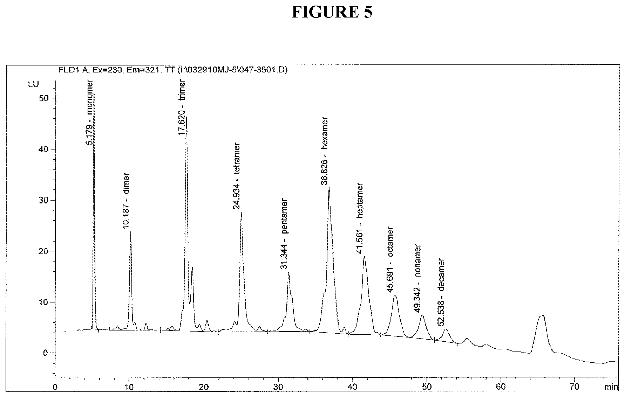

The above observations are further reflected in the HPLC profiles of (i) shaken sample (Figure 3); (ii) supernatant (Figure 4); and (iii) sediment (Figure 5).

### EXAMPLE 4

### Analysis of enantiomer (-)-catechin content pre- and post-processins

In order to assess the effect of heat treatment on epimerization of (-)-epicatechin into (-)-catechin, several beverages prepared according to Example 2 (processing temperatures for each sample are shown in Table 5) were measured for their (-)-epicatechin and (-)-catechin content and their ratio was then determined. The percent of (-)-catechin from the total sum of (-)-EC and (-)-C was also calculated. The data is represented in Table 5 and show that minimal epimerization occurred during processing, (compare "pre-process" sample with "processed" sample for each of the six beverage. Additionally, shelf storage did not negatively affect the (-)-epicatechin content.

**TABLE 5**

| **Description** | **(-)-EC/(-)-C** | **ratio%** | **(-)-C** |
|---|---|---|---|
| Raspberry AMD Precisa 50 Starch Pre-process (1.5 mg/g) | 10.8 | | 8.4 |
| **Raspberry AMD Precisa 50 Starch Processed 195F/10s (1.5 mg/g)** | 10.7 | | 8.5 |
| Banana/Choc AMD Precisa 50 Starch Pre-process (1.5 mg/g) | 8.2 | 10.9 | |
| **Banana/Choc AMD Precisa 50 Starch Processed 195F/10s (1.5 mg/g)** | 8.2 | 10.9 | |
| Straw/Banana AMD Precisa 50 Starch Pre-process (1.5 mg/g) | 10.7 | | 8.5 |
| **Straw/Banana AMD Precisa 50 Starch Processed 195F/10s (1.5 mg/g)** | 10.5 | | 8.7 |
| Pineapple/Coconut AMD Pre-process (1.0 mg/g) | 10.5 | | 8.7 |
| **Pineapple/Coconut AMD Processed 195F/10s (1.0 mg/g)** | 10.7 | | 8.5 |
| Raspberry AMD + 2% Precisa 50 Starch Pre-process (1.5 mg/g) | 9.8 | | 9.3 |
| **Raspberry AMD** + **2% Precisa 50 Starch Processed 220F/10s (1.5 mg/g)** | 9.7 | | 9.1 |
| Raspberry AMD Pre-process (1.5 mg/g) | 10.0 | | 9.3 |
| **Raspberry AMD Processed 220F/10s (1.5 mg/g)** | 10.1 | | 9.0 |
| | | | |
| **Post-production (220 F/10s) 1.5 mg/g Time = 0** | 8.7 | 10.3 | |
| **Shelf life = 3 months** | 11.4 | | 8.0 |
| **Shelf life = 4 months** | 11.0 | | 8.4 |
| **Shelf life = 5 months** | 11.0 | | 8.0 |
| **Shelf life = 6 months** | 10.5 | | 8.3 |
| **Shelf life = 8 months** | 12.5 | | 7.1 |
| **Shelf life = 11 months** | 12.0 | | 7.7 |

| | | | |
|---|---|---|---|
| Legend: AMD = acidified milk beverage; Precisa™ starch is available from National Starch Bridgewater, NJ, USA; 1.5 mg/g refers to the concentration of CP profile 1-10 in a drink composition; shelf life was determined upon storage at 23 C. | | | |

## Claims

1. A ready-to-drink composition which is a dairy-based, non-chocolate flavored beverage comprising a proteinaceous liquid; a stabilizer selected from pectin, carboxymethylcellulose and mixtures thereof; an edible acid; and a cocoa extract comprising cocoa polyphenols; wherein the pH is from 3.5 to 4.0.

2. A ready-to-drink composition according to claim 1, wherein the pH is from 3.8 to 4.0.

3. A ready-to-drink composition according to claim 1, wherein the stabilizer is high methoxyl pectin.

4. A ready-to-drink composition according to claim 1, wherein the edible acid is citric acid.

5. A ready-to-drink composition according to claim 1, wherein the composition is shelf stable.

## Patentansprüche

1. Trinkfertige Zusammensetzung, die ein Getränk auf Milchbasis ohne Schokoladengeschmack ist, umfassend eine proteinhaltige Flüssigkeit, einen Stabilisator ausgewählt aus Pektin, Carboxymethylcellulose und Mischungen davon, eine genießbare Säure und ein Kakaoextrakt, umfassend Kakaopolyphenole; wobei der pH-Wert von 3,5 bis 4,0 ist.

2. Trinkfertige Zusammensetzung nach Anspruch 1, wobei der pH-Wert von 3,8 bis 4,0 ist.

3. Trinkfertige Zusammensetzung nach Anspruch 1, wobei der Stabilisator Pektin mit hohem Methoxylgehalt ist.

4. Trinkfertige Zusammensetzung nach Anspruch 1, wobei die genießbare Säure Zitronensäure ist.

5. Trinkfertige Zusammensetzung nach Anspruch 1, wobei die Zusammensetzung lagerstabil ist.

## Revendications

1. Composition prête à boire qui est une boisson à base de produits laitiers, non aromatisée au chocolat comprenant un liquide protéique ; un stabilisateur choisi parmi la pectine, la carboxyméthylcellulose et des mélanges de ceux-ci ; un acide comestible ; et un extrait de cacao comprenant des polyphénols de cacao ; le pH allant de 3,5 à 4,0.

2. Composition prête à boire selon la revendication 1, dans laquelle le pH va de 3,8 à 4,0.

3. Composition prête à boire selon la revendication 1, dans laquelle le stabilisateur est une pectine à teneur élevée en méthoxyle.

4. Composition prête à boire selon la revendication 1, dans laquelle l'acide comestible est l'acide citrique.

5. Composition prête à boire selon la revendication 1, la composition étant à longue durée de conservation.
